# EUROPÄISCHE PATENTANMELDUNG

(11) **EP 1 161 063 A1**
(43) Veröffentlichungstag der Anmeldung: **05.12.2001**
(21) Anmeldenummer: 01106982.0
(22) Anmeldetag: 21.03.2001
(51) Int. Cl.: H04M 1/2745

(54) **Verfahren zur Erzeugung eines Telefonbuches in einem Fernsprechendgerät**

(30) Priorität: 03.06.2000 DE 10027659
(71) Anmelder: Tenovis GmbH & Co. KG, 60362 Frankfurt am Main (DE)
(72) Erfinder: Jung, Wolfgang, 63517 Rodenbach (DE)
(74) Vertreter: Patentanwaltskanzlei WILHELM & BECK

(57) **Zusammenfassung**

Ein Verfahren zum automatischen Aufbau eines lokalen Telefonbuches (14) in einem Fernsprechendgerät (10) verwendet die von einer Nebenstellenanlage (20) aus deren Telefonbuch (21) entnommene Information über einen Eintrag (16), welche von der Nebenstellenanlage an das Fernsprechendgerät (10) übermittelt wird. Die Übermittlung eines solchen Eintrags (16) findet statt, wenn vom Fernsprechendgerät (10) aus ein Anruf erfolgt oder wenn zum Fernsprechendgerät (10) angerufen wird. Eine Steuereinrichtung (12) innerhalb des Femsprechendgerätes (10) überführt den von der Nebenstellenanlage (20) empfangenen Eintrag (16) in das lokale Telefonbuch (14), falls er dort noch nicht vorhanden ist oder dort abweichend vorhanden ist. Falls das lokale Telefonbuch (14) voll sein sollte, kann der Eintrag im Wahlwiederholspeicher (15) zwischengespeichert werden, bis Speicherplatz im lokalen Telefonbuch (14) bereitgestellt wurde.

## Beschreibung

### Technisches Gebiet

Die Erfindung betrifft ein Verfahren zur Erzeugung von Einträgen in ein lokales Telefonbuch eines Fernsprechendgerätes, wobei der zu einem am Fernsprechendgerät ankommenden oder von dort ausgehenden Anruf zugehörige Eintrag aus dem Telefonbuch der Nebenstellenanlage zum Fernsprechendgerät übertragen wird. Weiterhin betrifft die Erfindung ein Fernsprechendgerät mit einem lokalen alphanumerischen Telefonbuch, mit einer alphanumerischen Anzeige, gegebenenfalls mit einem Wahlwiederholspeicher und mit einer Steuereinrichtung zum Austausch von Daten mit einer Nebenstellenanlage, wobei mit der Steuereinrichtung insbesondere der zu einem am Fernsprechendgerät ankommenden oder von dort ausgehenden Anruf zugehörige Eintrag aus dem Telefonbuch der Nebenstellenanlage empfangen werden kann.

### Stand der Technik

Fernsprechendgeräte bieten häufig ein integriertes lokales Telefonbuch, da diese Funktionalität für den Benutzer sehr angenehm ist. Dieses Telefonbuch hat typischerweise eine Speicherkapazität für mehrere hundert Einträge. Problematisch ist dabei, dass das Fernsprechendgerät in der Regel über keine alphanumerische Tastatur verfügt, so dass die Eingabe von Alpha-Zeichen in das Telefonbuch sehr umständlich und aufwendig ist. Um eine solche Eingabe zu ermöglichen, werden die Tasten einer Ziffemtastatur am Telefon mit einer Mehrfachfunktion ausgestattet, wobei durch wiederholtes Drücken einer Taste in einem kurzen Zeitabstand zyklisch eine der Taste zugeordnete Reihe von Alpha-Zeichen durchlaufen wird. Um einen Text aus Alpha-Zeichen einzugeben, muss der Benutzer daher Tastendrücke ausführen, deren Anzahl einem Vielfachen der Zahl der einzugebenden Buchstaben entspricht. Diese Prozedur ist sehr mühsam und aufgrund der einzuhaltenden Zeitabstände beim Drücken der Tasten auch sehr fehlerträchtig. Das geschilderte Problem trifft insbesondere für Fernsprechendgeräte innerhalb von Nebenstellenanlagen zu, die über ein integriertes lokales Telefonbuch verfügen. Durch den geschilderten hohen Aufwand für die Erstellung eines lokalen Telefonbuches werden Benutzer davon abgehalten, ein derartiges Telefonbuch zu erstellen. Hierdurch sinkt der Nutzungsgrad des lokalen Telefonbuches, welches in vielen Fällen völlig ungenutzt bleibt.

### Darstellung der Erfindung, Aufgabe, Lösung, Vorteile

Aufgabe der vorliegenden Erfindung war es, die Erzeugung von Einträgen in einem lokalen Telefonbuch eines Fernsprechendgerätes, welches über keine komfortable alphanumerische Tastatur verfügt, zu erleichtern.

Diese Aufgabe wird durch das in Anspruch 1 angegebene Verfahren sowie ein Fernsprechendgerät gemäß Anspruch 4 gelöst. Vorteilhafte Ausgestaltungen sind in den Unteransprüchen angegeben.

Das Verfahren zur Erzeugung von Einträgen in ein lokales Telefonbuch in einem Fernsprechendgerät baut darauf auf, dass der zu einem am Fernsprechendgerät ankommenden Anruf oder zu einem vom Fernsprechendgerät ausgehenden Anruf zugehörige Eintrag aus dem Telefonbuch der Nebenstellenanlage (Wählanlage), an welche das Fernsprechendgerät angekoppelt ist, zum Fernsprechendgerät übertragen wird. Eine derartige Funktionalität stellt eine wichtige Systemeigenschaft vieler Nebenstellenanlagen dar. Hierbei wird der Anrufer oder der Angerufene mit seinem Namen auf einer Anzeigeeinrichtung am Fernsprechendgerät dargestellt. Somit liegt die für das lokale Telefonbuch des Fernsprechendgerätes benötigte Information in der Regel bereits vor, da sie aus einem entsprechenden Telefonbuch der Nebenstellenanlage bereitgestellt wird. Erfindungsgemäß wird diese Information ohne Alpha-Eingabe nutzbar gemacht, indem der genannte Eintrag aus dem Telefonbuch der Nebenstellenanlage im lokalen Telefonbuch des Fernsprechendgerätes gespeichert wird, falls er dort nicht schon vorhanden ist, falls er dort abweichend vorhanden ist und/oder falls der Benutzer des Fernsprechendgerätes ein entsprechendes Speicherkommando eingibt. Durch das geschilderte Verfahren ist es möglich, im Fernsprechendgerät ein lokales und auf den jeweiligen Benutzer des Fernsprechendgerätes zugeschnittenes Telefonbuch anzulegen. Der Aufbau dieses Telefonbuches kann dabei quasi automatisch bzw. selbstlernend (adaptiv) erfolgen, wobei bei jedem vom Fernsprechendgerät aus getätigten Anruf oder am Fernsprechendgerät ankommenden Anruf die Daten des anderen Teilnehmers ins lokale Telefonbuch übernommen werden können, falls sie im zugrundeliegenden Telefonbuch der Nebenstellenanlage vorhanden sind und von dieser an das Fernsprechendgerät übermittelt wurden. Auf diese Weise wird das lokale Telefonbuch sukzessive mit denjenigen Einträgen aus dem Grundtelefonbuch der Nebenstellenanlage aufgebaut, welche für den jeweiligen Benutzer des Fernsprechendgerätes relevant sind. Die Relevanz dieser Einträge ergibt sich dabei von selbst durch die mit den entsprechenden Teilnehmern ausgeführten Anrufe. Weiterhin wird durch das Verfahren eine ständige Aktualisierung des lokalen Telefonbuches erreicht, da für jeden bereits vorhandenen Eintrag während eines Anrufes zum zugehörigen Teilnehmer überprüft wird, ob der lokale Eintrag noch mit dem Eintrag im Telefonbuch der Nebenstellenanlage übereinstimmt. Wird eine Abweichung festgestellt, so kann der Eintrag im lokalen Telefonbuch mit dem Eintrag aus dem Telefonbuch der Nebenstellenanlage überschrieben werden. Dies ist in der Regel sinnvoll, da das zentrale Telefonbuch der Nebenstellenanlage einer ständigen Wartung und Aktualisierung unterliegt. Vorzugsweise kann jedoch das Überschreiben eines bereits existierenden Eintrags im lokalen Telefonbuch davon abhängig gemacht werden, dass der Benutzer des Fernsprechendgerätes hiermit einverstanden ist. Vor dem Überschreiben eines Eintrages sollte daher ein sprechender Abfragedialog mit dem Benutzer ausgeführt werden.

Weiterhin kann das Verfahren auch so ausgeführt werden, dass die Übernahme eines vom Telefonbuch der Nebenstellenanlage übermittelten Eintrages in das lokale Telefonbuch immer nur dann erfolgt, wenn der Benutzer des Fernsprechendgerätes ein entsprechendes Speicherkommando gibt. Auf diese Weise liegt die Kontrolle über den Aufbau des lokalen Telefonbuchs vollständig beim Nutzer, wobei dieser jedoch zur Erzeugung von Einträgen keine umständliche alphanumerische Eingabe vornehmen muss. Vorzugsweise kann das Fernsprechendgerät in verschiedenen Betriebsweisen konfiguriert werden, die sich darin unterscheiden, inwieweit der Benutzer vor der Übernahme eines Eintrags in das Telefonbuch seine Zustimmung geben muss.

Bei dem erfindungsgemäßen Verfahren braucht der Benutzer demnach zur Speicherung einer Kontaktadresse (Name und Rufnummer) weder eine Alpha-Eingabe vorzunehmen noch eine Bedienprozedur aufzurufen. Das lokale Telefonbuch baut sich vielmehr automatisch auf. Die Ressourcen des integrierten Telefonbuchs werden daher optimal ausgenutzt, ohne dass der Benutzer Zeit für den Aufbau der Einträge benötigt.

Gemäß einer Weiterbildung des Verfahrens kann eine Warnmeldung an den Benutzer ausgegeben werden, falls der Speicher des lokalen Telefonbuchs des Fernsprechendgerätes voll ist und daher keinen weiteren Eintrag aufnehmen kann. In diesem Falle kann der Benutzer entscheiden, ob er sein lokales Telefonbuch überarbeiten möchte und zum Beispiel nicht mehr benötigte oder nicht mehr richtige Einträge löschen möchte.

Bei einer Weiterbildung des Verfahrens wird der aus dem Telefonbuch der Nebenstellenanlage empfangene Eintrag im Wahlwiederholspeicher des Fernsprechendgerätes abgelegt, falls der Speicher des lokalen Telefonbuches voll ist. Aus dem Wahlwiederholspeicher kann der Eintrag dann nach Bereitstellung von freiem Speicher im lokalen Telefonbuch entnommen und in das lokale Telefonbuch überführt werden. Der Eintrag geht somit nicht verloren, falls sich plötzlich eine Überfüllung des lokalen Telefonbuchs herausstellen sollte.

Die Erfindung betrifft weiterhin ein Fernsprechendgerät mit einem lokalen alphanumerischen Telefonbuch, mit einer alphanumerischen Anzeige, gegebenenfalls mit einem Wahlwiederholspeicher und mit einer Steuereinrichtung zum Austausch von Daten zwischen dem Fernsprechendgerät und einer Nebenstellenanlage, wobei mit der Steuereinrichtung insbesondere der zu einem am Fernsprechendgerät ankommenden oder vom Fernsprechendgerät ausgehenden Anruf zugehörige Eintrag aus dem Telefonbuch der Nebenstellenanlage - falls dort ein solcher vorhanden ist - empfangen werden kann. Das Fernsprechendgerät ist dadurch gekennzeichnet, dass die Steuereinrichtung so eingerichtet ist, dass sie ein Verfahren der oben geschilderten Art ausführen kann. Die Steuereinrichtung ist demnach so eingerichtet, dass sie einen aus dem Telefonbuch der Nebenstellenanlage empfangenen Eintrag in das integrierte lokale Telefonbuch des Fernsprechendgerätes überträgt, falls er dort noch nicht vorhanden ist, falls er dort abweichend vorhanden ist und/oder falls der Benutzer des Fernsprechendgerätes ein entsprechendes Speicherkommando eingibt. Sofern das Fernsprechendgerät einen Wahlwiederholspeicher besitzt, kann der von der Nebenstellenanlage empfangene Eintrag auch vorübergehend dort abgelegt werden. Dies ist insbesondere dann sinnvoll, wenn der Speicher des lokalen Telefonbuchs voll sein sollte und eine sofortige Übernahme des Eintrages daher nicht möglich ist.

### Kurze Beschreibung der Zeichnungen

Im folgenden wird die Erfindung mit Hilfe der Figuren beispielhaft erläutert. Es zeigen:
- Fig. 1: schematisch den Aufbau eines Fernsprechendgerätes und einer Nebenstellenanlage;
- Fig. 2: ein Flussdiagramm des Verfahrens zur Übernahme eines Eintrags in das lokale Telefonbuch;
- Fig. 3: ein Flussdiagramm der Wartung des lokalen Telefonbuchs.

### Bester Weg zur Ausführung der Erfindung

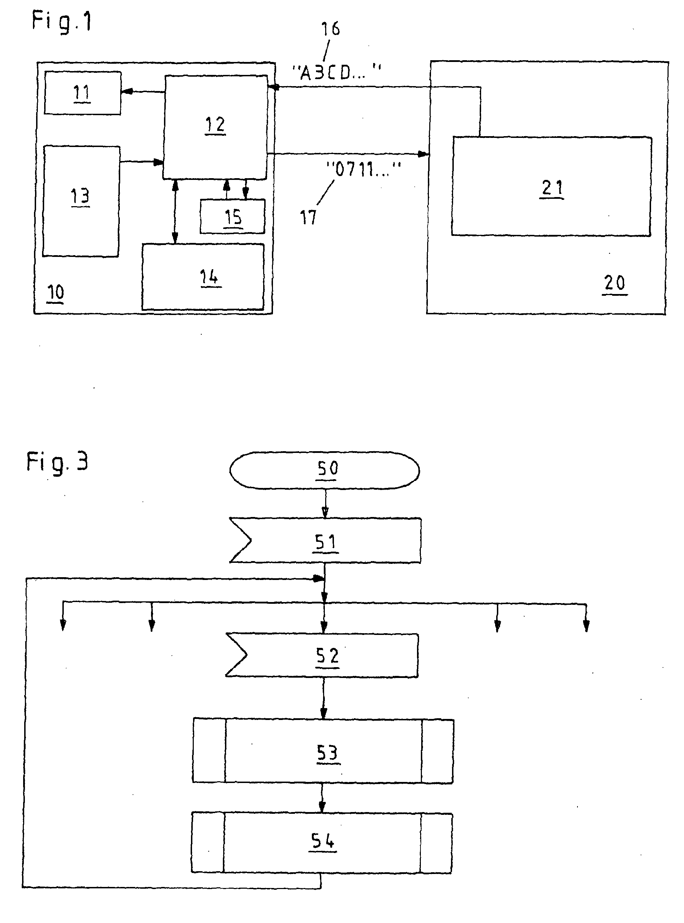

In Figur 1 sind schematisch die Elemente eines Fernsprechendgerätes 10 und einer zugehörigen Nebenstellenanlage 20 (Wählanlage) dargestellt. Das Fernsprechendgerät 10 besitzt eine Steuereinrichtung 12, welche mit verschiedenen Komponenten des Fernsprechendgerätes verbunden ist und über Kommunikationsverbindungen (zum Beispiel Funkverbindungen) mit der Nebenstellenanlage kommunizieren kann. Die Steuereinrichtung 12 ist insbesondere mit einer alphanumerischen Anzeige 11 zur Darstellung alphanumerischer Informationen sowie mit einer Tastatur 13 verbunden, über welche sie Eingaben des Benutzers empfangen kann. Weiterhin besitzt die Steuereinrichtung 12 bidirektionale Datenverbindungen zu einem lokalen Telefonbuch 14 des Fernsprechendgerätes sowie zu einem Wahlwiederholspeicher 15.

Wenn der Benutzer des Fernsprechendgerätes 10 einen Anruf tätigt, wird von der Steuereinrichtung 12 die eingegebene Rufnummer 17 an die Nebenstellenanlage 20 übermittelt. In der Nebenstellenanlage 20 wird geprüft, ob zu der gewählten Rufnummer ein Eintrag in das dortige Telefonbuch 21 vorhanden ist. Falls ein solcher Eintrag gefunden wird, wird dieser (alphanumerische) Eintrag 16 an die Steuereinrichtung 12 des Fernsprechendgerätes übermittelt. Die Steuereinrichtung 12 stellt den Eintrag 16 dann auf der Anzeige 11 dar. Weiterhin überprüft sie, ob zu der entsprechenden Rufnummer 17 bereits ein Eintrag im lokalen Telefonbuch 14 vorhanden ist oder nicht. Wenn kein solcher Eintrag vorhanden ist, oder wenn der vorhandene Eintrag von dem übermittelten Eintrag 16 abweicht, überträgt die Steuereinrichtung 12 den empfangenen Eintrag 16 in das lokale Telefonbuch. Gegebenenfalls kann vorher über die Anzeige 11 der Benutzer gefragt werden, ob er eine solche Übernahme des Eintrags 16 ins lokale Telefonbuch 14 wünscht. Die Übernahme des Eintrags kann dann davon abhängig gemacht werden, dass der Benutzer über die Tastatur 13 sein Einverständnis mitteilt.

Sollte der Speicher des Telefonbuchs 14 voll sein, so kann die Steuereinrichtung 12 den empfangenen Eintrag 16 aus dem Telefonbuch 21 der Nebenstellenanlage 20 vorübergehend im Wahlwiederholspeicher 15 ablegen. Der Benutzer kann dann durch Darstellung einer Warnmeldung auf der Anzeige 11 darauf hingewiesen werden, dass der Speicher des lokalen Telefonbuchs voll ist. Er kann daraufhin das lokale Telefonbuch 14 durchblättern und gegebenenfalls nicht mehr gewünschte Einträge entfernen. Nachdem auf diese Weise freier Speicherplatz zur Verfügung gestellt worden ist, kann die Steuereinrichtung 12 den im Wahlwiederholspeicher 15 abgelegten Eintrag 16 in das lokale Telefonbuch 14 überführen.

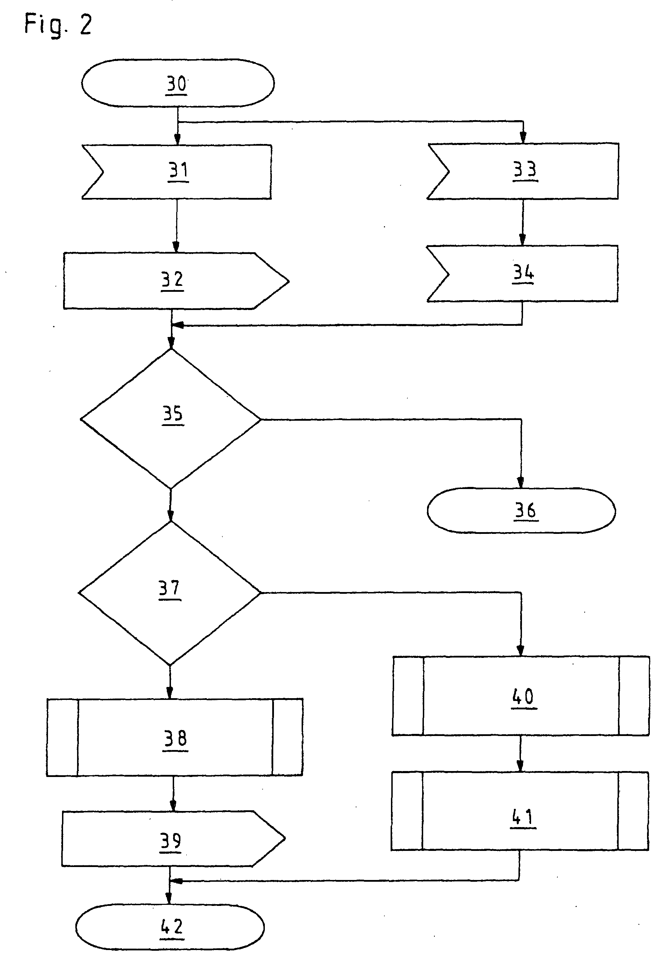

In Figur 2 ist in einem Flussdiagramm der Ablauf des Verfahrens zum sukzessiven Aufbau des lokalen Telefonbuchs aus automatisch übermittelten Gesprächsverbindungsinformationen dargestellt. Das Verfahren beginnt in Schritt 30 in einem Zustand n. Wenn bei dem Fernsprechendgerät im Schritt 31 dann ein Anruf von außen eingeht, wird im Schritt 32 die von der Nebenstellenanlage übermittelte Rufnummer und der aus dem Telefonbuch der Nebenstellenanlage entnommene Name des Anrufers angezeigt.

Alternativ kann auch ausgehend vom Zustand n in Schritt 30 der Benutzer des Fernsprechendgerätes selbst einen Anruf tätigen. Hierzu gibt er in Schritt 33 die Rufnummer, die er entweder aus einem Telefonbuch in Papierform oder über eine zentrale Serverabfrage erlangt hat, über die Tastatur des Fernsprechendgerätes ein. Das Fernsprechendgerät übermittelt diese Nummer dann an die Nebenstellenanlage, welche in ihrem Telefonbuch den zugehörigen Namen sucht und diesen in Schritt 34 an das Fernsprechendgerät übermittelt, wo er dem Benutzer angezeigt wird.

Im Schritt 35 wird dann überprüft, ob der von der Nebenstellenanlage übermittelte Eintrag im lokalen Telefonbuch des Fernsprechendgerätes bereits vorhanden ist. Sollte dies der Fall sein, so geht das System in Schritt 36 in den nächsten Zustand n+1 über. Eine Bearbeitung des lokalen Telefonbuches ist nicht erforderlich.

Ist dagegen der Eintrag nicht im lokalen Telefonbuch vorhanden, so wird im Schritt 37 überprüft, ob das lokale Telefonbuch voll ist oder ob es noch freien Speicherplatz bietet.

Wenn das Telefonbuch nicht voll ist, wird in Schritt 38 der Eintrag in das lokale Telefonbuch übernommen. Im Schritt 39 erfolgt ein Hinweis an den Benutzer, dass das Telefonbuch ergänzt wurde. Anschließend geht das System im Schritt 42 in den nächsten Zustand n+1 über.

Sollte sich dagegen in der Überprüfung im Schritt 37 herausgestellt haben, dass das lokale Telefonbuch voll ist, so wird im Schritt 40 der Eintrag in der Anrufliste im Wahlwiederholspeicher zwischengespeichert. Im Schritt 41 wird der Benutzer dann darauf hingewiesen, dass das Telefonbuch voll ist und dass er gegebenenfalls eine Wartung des Telefonbuches ausführen muss. Anschließend geht das System in Schritt 42 in den nächsten Zustand n+1 über.

In Figur 3 ist ein Flussdiagramm einer Wartungsprozedur dargestellt. Ausgehend vom Zustand n in Schritt 50 erfolgt in Schritt 51 der Aufruf der Wartungsprozedur durch den Benutzer des Fernsprechendgerätes. In Schritt 52 wählt der Benutzer das Telefonbuch zur Wartung aus. Im Schritt 53 blättert er durch das Telefonbuch und entfernt gegebenenfalls nicht mehr benötigte Einträge. Hierdurch wird freier Speicherplatz erzeugt. In Schritt 54 prüft das System, ob im Wahlwiederholspeicher zwischengespeicherte Einträge vorhanden sind, welche zuvor nicht in das Telefonbuch übernommen werden konnten. Falls dies der Fall ist, werden diese Einträge aus dem Wahlwiederholspeicher in das lokale Telefonbuch überführt. Anschließend geht das System in den Menüpunkt nach dem Aufruf der Wartung zurück.

## Patentansprüche

1. Verfahren zur Erzeugung von Einträgen in ein lokales Telefonbuch (14) eines Fernsprechendgerätes (10), wobei der Eintrag (16), der zu einem am Fernsprechendgerät ankommenden oder von dort ausgehende Anruf gehört, aus dem Telefonbuch (21) einer Nebenstellenanlage (20) zum Fernsprechendgerät übertragen wird,
**dadurch gekennzeichnet, dass** der genannte Eintrag (16) im lokalen Telefonbuch (14) gespeichert wird, falls er dort noch nicht oder abweichend vorhanden ist und/oder falls der Benutzer ein Speicherkommando eingibt.

2. Verfahren nach Anspruch 1,
**dadurch gekennzeichnet, dass** eine Warnmeldung ausgegeben wird, falls im Speicher des lokalen Telefonbuches (14) des Fernsprechendgerätes (10) kein freier Speicherplatz mehr vorhanden ist.

3. Verfahren nach einem der Ansprüche 1 oder 2,
**dadurch gekennzeichnet, dass** ein aus dem Telefonbuch (21) der Nebenstellenanlage (20) empfangener Eintrag (16) im Wahlwiederholspeicher (15) des Fernsprechendgerätes (10) abgelegt wird und dass der Eintrag hieraus nach Bereitstellung von Speicherplatz in das lokale Telefonbuch (14) des Fernsprechendgerätes übernommen wird.

4. Fernsprechendgerät (10) mit einem lokalen alphanumerischen Telefonbuch (14), mit einer alphanumerischen Anzeige (11), gegebenenfalls mit einem Wahlwiederholspeicher (15) und mit einer Steuereinrichtung (12) zum Austausch von Daten mit einer Nebenstellenanlage (20), wobei mit der Steuereinrichtung insbesondere der zu einem am Fernsprechendgerät (10) ankommenden oder von dort ausgehende Anruf zugehörige Eintrag (16) aus dem Telefonbuch (21) der Nebenstellenanlage empfangen werden kann,
**dadurch gekennzeichnet, dass** die Steuereinrichtung (12) so eingerichtet ist, dass sie ein Verfahren nach einem der Ansprüche 1 bis 3 ausführen kann.
